# EUROPEAN PATENT SPECIFICATION

(11) **EP 1 101 408 B1**
(45) Date of publication and mention of the grant of the patent: **28.04.2010**
(21) Application number: 00204072.3
(22) Date of filing: 17.11.2000
(51) Int. Cl.: A23C 19/05

(54) **Method for preparing a low-fat cheese**
Verfahren zur Herstellung eines fettarmen Käses
Procédé de préparation d'un fromage à faible teneur en matières grasses

(30) Priority: 19.11.1999 NL 1013628
(43) Date of publication of application: 23.05.2001
(73) Proprietor: Friesland Brands B.V., 7943 PE Meppel (NL)
(72) Inventor: van Arem, Everhardus Jacobus Franciscus, 8802 CR Franeker (NL); Ketelaar, Dominicus Gerardus, 8701 HL Bolsward (NL); Hup, Gerhard, 8912 TX Leeuwarden (NL)
(74) Representative: Prins, Adrianus Willem

(56) References cited:
- EP-A- 0 629 349
- WO-A-98/48636
- FR-A- 2 239 948
- FR-A- 2 394 984
- US-A- 4 271 201
- US-A- 4 518 616

## Description

This invention relates to a method for the preparation of a low-fat cheese. More particularly, this invention relates to a method for the preparation of a low-fat cheese, which method comprises a step in which a whey-protein concentrate is added to cheese milk. By the term 'low-fat cheese' in this description and the subsequent claims is meant a cheese having a low fat content, and more particularly 0⁺-30⁺ cheese. The qualification '30⁺' for cheese and cheese products means that the product or the cheese has a fat content of more than 30% by weight based on the dry matter. Usually, there is an upward margin of 4%. A 30⁺ cheese therefore contains 30-34% by weight of fat and an 0⁺ cheese accordingly contains up to 4% by weight of fat.

In the making of cheese, such as cheese of the half-hard type, cheese milk is first curdled to form curd. The curd is transferred to a suitable vessel, whereafter curd washing water is used to wash out lactose (milk sugar) coming from the milk. Thereafter the product is processed further into cheese. What is achieved by washing the curd is inter alia that the pH of the cheese after fermentation can be set within acceptable limits. In current types of cheese, these limits are usually in the range of about pH 5.1-5.5.

Low-fat cheeses can be suitably prepared by addition of whey-protein concentrate to the cheese milk. This whey-protein concentrate binds moisture in the cheese, so that it remains soft in spite of the low fat content. As a result, a low-fat cheese is obtained with a pleasing taste and also an otherwise positive appreciation by the consumer. The use of whey-protein concentrate as fat replacer is described inter alia in EP-A-0 520 581, EP-A-O 629 349 and in NL-A-10 09397.

It has been found that the curd that is obtained from cheese milk to which such a whey-protein concentrate has been added contains a relatively high content of lactose. In the course of cheese making, lactose is at least partly converted to lactate. Through fermentation of the curd into cheese, in principle all lactose is converted to lactate. Due to the high lactose content in the curd, the cheese that is prepared from the curd will possess a high lactate content. The result of too high a content of lactose and lactate in the curd is that the cheese prepared therefrom acquires a too low pH, hence becomes acid in taste, while the low pH moreover can have an effect on the consistency, the mouthfeel and the taste experience in general, so that this cheese is, or becomes, unsuitable or less suitable for consumption. For this reason, lactose is normally washed from the curd. However, to rinse out the lactose to a sufficient extent, much washing water is necessary.

The use of much washing water is economically unfavourable. Moreover, the use of much washing water can entail environmental harm.

The washing water added to the whey/curd mixture moreover ends up in the whey, so that the evaporation costs of the whey increase if the substances dissolved or suspended therein are recovered.

Furthermore, the use of much washing water can have disadvantageous consequences for the quality of the cheese. Thus, as a result of the use of curd washing water, valuable substances, such as minerals, may be rinsed out of the cheese, so that the cheese deteriorates in quality.

Still, in the prior art, the content of lactose and lactate of low-fat cheeses is normally adjusted to a suitable value by washing out the curd. In NL-A-10 09397, for instance, a method for preparing a low-fat cheese with holes is described, in which more than 40 or even more than 50% by weight of washing water is used to adjust the content of whey constituents partly originating from a whey-protein concentrate to an acceptable level.

US-A-4,518,616 teaches a process for recovering whey proteins. A whey protein concentrate is mixed with milk and this enriched milk is subsequently subjected to an ultrafiltration step, after which a curd is formed. The aim to enrich the milk with whey protein concentrate is to use as much protein material from the milk as possible. The ultrafiltration step is required to avoid that syneresis occurring during cheese preparation leads to a loss of whey proteins.

In FR-A-2,239,948 a process is described wherein whey is concentrated using ultrafiltration. Subsequently, cream or fats are added, after which this composition is added to cheese milk. Then, a second ultrafiltration step is carried out.

FR-A-2,394,984 teaches to add whey protein to a cheese milk followed by a concentration step using a membrane.

In WO-A-98/48636 a cheese is prepared using milk having a reduced lactose content.

An object of the present invention is to provide a method in which the amount of water that is necessary to wash the curd is reduced considerably. In this way, a low-fat cheese can be obtained with favourable taste properties and positive appreciation by the consumer, while moreover a saving on the costs of the preparation thereof can be achieved, and while nutritionally valuable substances are not unnecessarily washed out.

In particular, the preparation of a low-fat cheese of the types 0⁺-30⁺ is contemplated. The method according to the invention accordingly contemplates the preparation of cheeses having a fat content from above 0 to 34% by weight, based on the dry matter.

It has now been found that the stated objective can be realised by preparing a low-fat cheese having a fat content from above 0 to 34% by weight based on the dry matter according to a method which comprises the following consecutive steps:
a) making a cheese milk by adding a whey-protein concentrate to milk;
b) subjecting the cheese milk to a step in which the lactose content is reduced to less than 4% by weight, based on the cheese milk and wherein the weight ratio of lactose/protein is reduced to less than 1.0; and
c) further processing the cheese milk into cheese wherein step c) comprises converting the cheese milk into curd and whey, followed by draining whey from the curd and washing the remaining whey and curd mixture with water, the amount of washing water used being less than 20% by weight, based on the weight of the whey and curd mixture.

The whey-protein concentrate that is reconstituted for addition in step a) to obtain a cheese milk can be suitably obtained by adding calcium ions to a solution of 25-50 wt.% of whey-protein based on the dry matter, and subsequently subjecting this solution to a heat treatment and homogenisation step. The product obtained can optionally be concentrated by evaporation and even be dried entirely.

In step a), according to the invention, a cheese milk is obtained by adding a whey-protein concentrate, optionally after dilution with water, to wholly or partially skimmed milk. The thus obtained cheese milk, after standardisation to desired protein and fat contents, is suitable to make cheese from it.

Of importance is that the removal of the lactose, whereby the lactose content is reduced, proceeds from the cheese milk after the whey-protein concentrate has been added, and hence not after curd formation. What is achieved in this way is that the lactose present in the whey-protein concentrate is separated off in an advantageous manner along with the lactose that was already present in the cheese milk. Since in this way a considerable reduction of the lactose content of the cheese milk (which includes the whey-protein concentrate) can be obtained, considerably less washing water will suffice in washing the curd that is prepared from this cheese milk.

In addition, it has been found that removing lactose from the cheese milk can be done more easily and better controllably than removing it from the curd using washing water.

Step b) can be carried out in such a manner that a permeate of a lactose solution with milk minerals is obtained. What is accomplished in this way is that lactose is not concentrated in the cheese milk, while the protein *is* concentrated in the cheese milk. This is to be preferred to the conventional manner of removing lactose from the curd, whereby, in addition to lactose, protein is also rinsed out and whereby, moreover, loss of minerals can occur. It is noted that lactose, under the influence of starter which is added in the preparation of curd from cheese milk, can be converted at least partly into lactate (lactic acid or the acid residue thereof). Therefore, depending on the position in the process, lactose may also be partly converted to lactate. In the eventual cheese, the lactose, as far as available, is normally converted entirely into lactate.

Step c) comprises the further processing of cheese milk into cheese. To that end, the cheese milk may first be supplemented with other ingredients. Thus, cream may be added to adjust the fat content. Also, water may be added to obtain a suitable dilution.

Step c) comprises the typical steps for the production of low-fat cheeses based on cheese milk with whey-protein concentrate, such as pasteurisation, cooling, adding starter culture, rennet, additives such as particular salts and colouring.

Through the addition of the rennet, the cheese milk can be converted into curd. The curd is cut and transferred into suitable moulds. Any whey present can be drained and the curd can be washed to reduce the lactose/lactate content still further.

The amount of washing water that is to be used in washing the curd is determined by the desired final concentration of lactose/lactate in the curd. The final concentration of lactose/lactate in the curd partly determines the quality of the finished cheese. It has been found that a low-fat cheese with good properties as regards taste, mouthfeel and other consumption properties can be obtained if the concentration of lactose is less than 4% by weight and preferably less than 3% by weight, based on the milk. Preferably, the weight ratio of lactose/protein in this cheese milk is less than 0.8.

According to the invention, it has been found that a suitable lactose/lactate content can be achieved if washing of the remaining curd is carried out with an amount of water less than 20% by weight or less, based on the weight of the whey and curd mixture.

The curd is subsequently pressed in the conventional manner in cheese moulds, brined and coated and further treated in the usual manner to obtain a cheese.

The separation of at least a part of the lactose from the cheese milk in step b) is preferably carried out with the aid of ultrafiltration. Ultrafiltration is carried out with the aid of membranes and/or hollow phases which, depending on their pore sizes, are capable of separating molecules by size, that is, according to molecular weight and molecular structure. In general, particles having a diameter greater than about 0.01 µm, i.e. a molecular weight of from 1,000 to 1,000,000, or still greater, remain behind in the retentate. In general, in ultrafiltration, proteins cannot pass the membrane. According to the invention, therefore, protein particles from the cheese milk cannot, but the lactose molecules can, pass the membrane, so that the protein content of the retentate can rise but lactose remains equally divided between retentate and permeate. The speed of the liquid is typically about 3-30 m/s and the maximum pressure applied is 10 bar.

Incidentally, the use of ultrafiltration in the manufacture of dairy products is already known, for instance from NL-A-10 05906. In that Dutch patent application, a method is described for preparing from milk a milk fraction having a reduced lactose content. To that end, using ultrafiltration, milk is separated into a fraction having a high protein content and a low protein content. The fraction with the low protein content is subsequently subjected to nanofiltration or reverse osmosis to subsequently obtain two streams, one stream with a high and one stream with a low lactose content. In contrast with the present invention, a low-protein milk solution with an adjusted lactose content is prepared.

The apparatus in which the ultrafiltration is carried out according to the present invention can be based, for instance, on hollow elements which comprise a layer of a suitable membrane material. The solution to be filtered can be passed along the inside or outside of the hollow tube, and the filtrate, also referred to as permeate, is then obtained on the other side. According to the invention, a stream that is rich in lactose is obtained on the filtrate side of the membrane. The cheese milk remains on the retentate side of the membrane and is concentrated, so that the protein concentration rises.

Particularly suitable as ultrafiltration equipment is the Pilotplant Type UFSW of Tetra Pak Filtration Systems, which is provided, for instance, with a set of 4 spirally wound Koch modules, type S4HKF-131VYV. The membranes in these modules are provided with V-spacers, yielding a membrane surface area of 6.9 m² per module. According to the specification of the manufacturer, this type of membranes is suitable to achieve with skim milk a dry matter content of 25% by weight at a maximum. Work is done at a feeding pressure of 1 bar and a circulation pressure of 4 bar. Per hour, for instance in the processing of skim milk, at a process temperature of, for instance, 10°C, an amount of 400 litres of permeate can be discharged.

A higher temperature (for instance 50°C) can be used if higher fluxes through the membrane are desired. This may be necessary, for instance, if further-going concentration of the proteins is desired.

Furthermore, it is possible to add water to the cheese milk before it is subjected to step b). Also, during the implementation of the ultrafiltration step of step b), water may be added. This particular form of ultrafiltration is defined in this application as diafiltration. What can be achieved by adding water during the filtration is that the lactose concentration in the retentate decreases, while the protein concentration rises less than if no water was added. Depending on the amount of water used in the diafiltration, the protein concentration in the cheese milk remains constant or may even decrease. With the aid of diafiltration, therefore, the lactose/protein ratio in the cheese milk can be influenced.

It has been found that by the use of diafiltration the weight ratio of lactose/total protein in cheese milk having a lactose content of 4.0-4.6% by weight can be reduced from 1.0-1.3 to less than 1, preferably to 0.5-0.75. The lactose content in the cheese milk after diafiltration was then 2.1-3% by weight. Based on casein protein, the weight ratio of lactose/casein protein was reduced from 1.5-1.9 to 0.75-1.15.

The invention will now be illustrated in and by the following examples.

### Example 1

A dried protein concentrate was prepared as described in Example 1 of EP-A-0 520 581. Of this concentrate, a 10 wt.% solution was prepared with cold water. This mixture was subsequently added to skim milk, such that the percentage of dried protein concentrate on the total amount of cheese milk was 1.5% by weight.

The mixture was subsequently subjected to an ultrafiltration treatment at a temperature of 10°C until the protein content in the retentate had risen to about 7% by weight. With cream and water, the retentate was subsequently diluted again and standardised to the desired composition for cheese making, of 1.25% by weight of fat and 4.05% by weight of protein. As a result of this treatment, the lactose content had then decreased to 2.35% by weight. Ultrafiltration was carried out on a pilot plant supplied by Tetra Pak Filtration Systems and provided with Koch modules, type S4HKF-131VYV.

For making cheese, the cheese milk thus obtained was thereupon pasteurised in the usual manner to 74°C and cooled down to the renneting temperature of 33°C. The vat filling was 400 litres and the cheese preparation was further carried out in a manner as also described in Example 1 of EP-A-0 629 349. To the milk were added 2 litres of an active, mesophilic starter culture type Bos and 4 litres of an active culture APS₁₃, as well as 80 grams of a 35 wt.% solution of calcium chloride, 80 grams of cheese rennet and 1 ml of annatto cheese colouring. The ingredients mentioned are available from CSK Food Enrichment BV, Netherlands.

Renneting the milk and cutting and processing the curd was done in the manner customary in the cheese industry. After draining a portion of the whey formed, it was sufficient to add a limited amount of curd washing water. A curd washing water percentage of 15% based on the residue of whey and curd proved sufficient to obtain a basis for preparing a good cheese. The post-heating temperature was 32°C. From this cheese vat, five cheeses of well over 8 kg were obtained, which, after brining and treatment with cheese coating, were allowed to mature further in a natural store at a temperature of 14°C. At the cheese age of 14 days, the composition of a cheese was determined with the following result:

| | |
|---|---|
| Moisture content | 52.9% |
| Fat content on dry matter | 23.4% |
| Salt content on dry matter | 4.1% |
| pH | 5.35 |

At an age of 12 weeks, the matured cheese was inspected and compared with cheese prepared according to the above-mentioned EP-A-0 629 349.

A clear improvement over the cheese described in EP-A-0 629 349 was established, regarding both consistency and odour and taste. By incorporating into the cheese a triple amount of protein concentrate compared with EP-A-0 629 349, the cheese obtained a creamier structure. The ultrafiltration treatment of the milk made it possible to incorporate additional protein concentrate without the use of large amounts of curd washing water and without giving rise to a sharp taste owing to undue acid formation. The cheese taste was full and pure.

### Example 2

A concentrated cheese whey having a protein content in the dry matter of 50% by weight was subjected to the procedure according to Example 1 of EP-A-0 520 581 and subsequently, without evaporation or drying, added to skim milk. The ratio of cheese whey and skim milk was chosen such that the mixture contained 2% by weight of dry matter coming from the cheese whey.

This mixture was subsequently subjected to an ultrafiltration treatment at 10°C in the manner described in Example 1, until the protein content in the retentate had risen to about 6% by weight. With cream and water, the retentate was then standardised to the desired composition for cheese making, of 0.75% by weight of fat and 4.10% by weight of protein. The lactose content was 2.25% by weight.

Of the thus obtained cheese milk, thereupon, for making cheese, again 400 litres were pasteurised, in the usual manner, at 74°C and cooled down to the renneting temperature of 33°C. Analogously to Example 1, this time a vat of 10⁺ cheese was prepared. An amount of curd washing water of 20% based on the residue of whey and curd was used.

At the cheese age of 14 days, the composition of a cheese was determined, with the following outcome:

| | |
|---|---|
| Moisture content | 56.3% |
| Fat content on dry matter | 11.8% |
| Salt content on dry matter | 5.7% |
| pH | 5.26 |

At an age of 12 weeks, the matured cheese was inspected. This cheese did not look at all like a traditionally known 10⁺ cheese and, both as to consistency and odour and taste, was little inferior to the 20⁺ cheese from Example 1.

### Example 3

In the same manner as in Example 1, for the preparation of a batch of cheese, a dried protein concentrate as prepared according to Example 1 of EP-A-0 520 581 was mixed in a 10 wt.% ratio with cold water. This mixture was subsequently added to skim milk, such that the percentage of dried protein concentrate on the total amount was 1.5% by weight.

The thus formed mixture was also ultrafiltered at a temperature of 10°C until the protein content in the retentate had risen to about 7% by weight. With cream and water, the retentate was subsequently standardised to the desired composition for cheese making, of 1.25% by weight of fat and 4.05% by weight of protein. The lactose content was 2.35% by weight.

For the making of cheese, an amount of 400 litres of the thus obtained cheese milk was, in the usual manner, pasteurised at 74°C and cooled down to the renneting temperature of 33°C for the preparation of a 20⁺ cheese with propionic acid fermentation.

Thereafter, in the cheese vat, there were added to the cheese milk: 2 litres of an active starter culture type Bos, 5 ml of a *Lactobacillus bulgaricus* concentrate, 3 ml of a concentrate of a propionic acid culture (both concentrates are also obtainable from CSK Food Enrichment BV, Netherlands), 80 grams of a 35 wt.% solution of calcium chloride, 8 ml of a β-carotene preparation (Centrale Aankoop FNZ, Netherlands) and 80 grams of cheese rennet.

Renneting of the milk and cutting and processing the curd obtained were carried out by the commonly known procedure. After draining a portion of the cheese whey, there was added to the residual portion 35% of curd washing water, based on the residue of whey and curd. The washing water had a temperature which was set such that the whey and curd mixture obtained a temperature of 37°C.

After a total processing duration of 55 minutes, the curd mass was drained and filled into 5 cheese moulds for 8 kilograms. The obtained cheeses were pressed and brined in the usual manner. Next, these cheeses were stored on shelves in a cheese store at a maturing temperature of 14°C and provided in the known manner with a number of layers of cheese coating.

At an age of 14 days, one of the cheeses was sampled, and the following composition was found:

| | |
|---|---|
| Moisture content | 51.3% |
| Fat content on dry matter | 22.8% |
| Salt content on dry matter | 3.3% |
| pH | 5.40 |

The other cheeses were transferred at an age of 14 days to a cheese box having a temperature of 19°C to ferment until the propionic acid fermentation had progressed far enough and holes of the desired size had formed.

When inspected for appearance, consistency and taste, this cheese exhibited fine round eyes of 10 to 20 millimetres in diameter, well-distributed over the cross-sectional area. The consistency was excellent and the flavour was sweet and nutty.

## Claims

1. A method for preparing a cheese having a fat content from above 0 to 34% by weight based on the dry matter, comprising the consecutive steps of: a) making a cheese milk by adding a whey-protein concentrate to milk; b) subjecting the cheese milk to a step in which the lactose content is reduced to less than 4% by weight, based on the cheese milk and wherein the weight ratio of lactose/protein is reduced to less than 1.0; and c) further processing the cheese milk into cheese wherein step c) comprises converting the cheese milk into curd and whey, by draining whey from the curd and washing the remaining whey and curd mixture with water, the amount of washing water used being less than 20% by weight, based on the weight of the whey and curd mixture.

2. A method according to claim 1, wherein step b) comprises an ultrafiltration step.

3. A method according to claim 1 or 2, wherein step b) comprises a diafiltration step.

4. A method according to any one of the preceding claims, wherein the content of lactose in carrying out step b) is reduced to less than 3% by weight based on the cheese milk.

5. A method according to any one of the preceding claims, wherein the weight ratio of lactose/protein in carrying out step b) is reduced to less than 0.8.

## Patentansprüche

1. Verfahren zur Herstellung eines Käses mit einem Fettgehalt von über 0 bis 34 Gew.-% bezogen auf die Trockenmasse, umfassend die aufeinander folgenden Schritte: a) Herstellen einer Käsemilch durch Zugabe eines Molkeproteinkonzentrates zu Milch; b) Unterwerfen der Käsemilch einem Schritt, in welchem der Lactosegehalt auf weniger als 4 Gew.-% bezogen auf die Käsemilch vermindert wird und wobei das Gewichtsverhältnis von Lactose/Protein auf weniger als 1,0 vermindert wird; und c) Weiterverarbeiten der Käsemilch in Käse, wobei Schritt c) das Umwandeln der Käsemilch in Käsebruch und Molke umfasst, gefolgt von Drainieren der Molke von dem Käsebruch und Waschen der zurückbleibenden Molke- und Käsebruchmischung mit Wasser, wobei die Menge des verwendeten Waschwassers weniger als 20 Gew.-% bezogen auf das Gewicht der Molke- und Käsebruchmischung beträgt.

2. Verfahren gemäß Anspruch 1, wobei der Schritt b) einen Ultrafiltrationsschritt umfasst.

3. Verfahren gemäß Anspruch 1 oder 2, wobei der Schritt b) einen Diafiltrationsschritt umfasst.

4. Verfahren gemäß einem der vorherigen Ansprüche, wobei der Lactosegehalt beim Durchführen des Schritts b) auf weniger als 3 Gew.-% bezogen auf die Käsemilch vermindert wird.

5. Verfahren gemäß einem der vorherigen Ansprüche, wobei das Gewichtsverhältnis von Lactose/Protein beim Durchführen des Schritts b) auf weniger als 0,8 vermindert wird.

## Revendications

1. Procédé de préparation d'un fromage ayant une teneur en matières grasses de plus de 0 % à 34 % en poids par rapport à la matière sèche, comprenant les étapes consécutives consistant à :
a) préparer un lait de fromagerie par l'addition d'un concentré de protéine de sérum à du lait ;
b) soumettre du lait de fromagerie à une étape dans laquelle la teneur en lactose est réduite à moins de 4 % en poids, par rapport au lait de fromagerie et où le rapport en poids de lactose/protéine est réduit à moins de 1,0 ; et
c) traiter à nouveau le lait de fromagerie en fromage
où l'étape c) consiste à convertir le lait de fromagerie en caillé et sérum, suivie par l'élimination du caillé et à laver le mélange de sérum et de caillé restant avec de l'eau, la quantité d'eau de lavage utilisée étant inférieure à 20 % en poids, par rapport au poids du mélange de sérum et de caillé.

2. Procédé selon la revendication 1, où l'étape b) comprend une étape d'ultrafiltration.

3. Procédé selon la revendication 1 ou 2, où l'étape b) comprend une étape de diafiltration.

4. Procédé selon l'une quelconque des revendications précédentes, où la teneur en lactose lors de la réalisation de l'étape b) est réduite à moins de 3 % en poids par rapport au lait de fromagerie.

5. Procédé selon l'une quelconque des revendications précédentes, où le rapport en poids de lactose/protéine lors de la réalisation de l'étape b) est réduit à moins de 0,8.
